# EUROPÄISCHE PATENTSCHRIFT

(11) **EP 1 133 882 B1**
(45) Veröffentlichungstag und Bekanntmachung des Hinweises auf die Patenterteilung: **06.09.2006**
(21) Anmeldenummer: 99963194.8
(22) Anmeldetag: 03.11.1999
(51) Int. Cl.: H04Q 3/58, H04Q 11/04

(54) **VERFAHREN ZUM HOCHFAHREN EINER ZWISCHENSCHNITTSTELLE, Z.B. EINER V5.2-SCHNITTSTELLE**
METHOD FOR RAMPING UP AN INTERFACE, E.G. A V5.2 INTERFACE
PROCEDE PERMETTANT DE METTRE A NIVEAU UNE INTERFACE TELLE QU'UNE INTERFACE V5.2

(30) Priorität: 26.11.1998 DE 19854654
(43) Veröffentlichungstag der Anmeldung: 19.09.2001
(73) Patentinhaber: SIEMENS AKTIENGESELLSCHAFT, 80333 München (DE)
(72) Erfinder: KÖSSLDORFER, Max, A-1220 Wien (AT)
(86) Internationale Anmeldenummer: PCT/DE1999/003513
(87) Internationale Veröffentlichungsnummer: WO 2000/033588

(56) Entgegenhaltungen:
- WO-A-98/41037
- WO-A-98/42148
- GILLESPIE A: "THE CONFIGURATION MANAGEMENT OF ACCESS NETWORKS WITH V5 INTERFACES" PROCEEDINGS OF THE 1994 IEEE NETWORK OPERATIONS AND MANAGEMENT SYMPOSIUM (NOMS '94), KISSIMMEE, FL, USA, 14-18 FEBRUAR 1994, Bd. 2, Seiten 519-529, XP000452351 ISBN: 0-7803-1812-9
- KHAKZAR K: "V5 INTERFACES BETWEEN DIGITAL LOCAL EXCHANGES AND ACCESS NETWORKS" FREQUENZ, Bd. 48 (1994) Januar/Februar, Nr. 1/2, Seiten 44-50, XP000439913 ISSN: 0016-1136

## Beschreibung

Die Erfindung betrifft ein Verfahren zum Hochfahren einer Zwischenschnittstelle eines Telekommunikationsnetzes in ihre Betriebsbereitschaft, über welche zwei Netzwerkelemente, wie z.B. eine Vermittlungsstelle und ein Anschaltenetz, für das Herstellen und Erhalten von Teilnehmerverbindungen des Netzes verbunden sind und in welcher
- eine oder mehrere Zwischenstrecken vorgesehen sind,
wobei die bzw. jede Zwischenstrecke eine Anzahl von Übertragungskanälen für den Austausch von Nutzinformation der Teilnehmerverbindungen sowie für den Austausch von Kommunikationsinformation für die Steuerung der Teilnehmerverbindungen und der Verwaltung der Zwischenschnittstelle aufweist sowie
- aufgrund einer im voraus festgelegten Konfiguration der Zwischenschnittstelle eine Anzahl der Übertragungskanäle als Kommunikationskanäle für den Austausch von Kommunikationsinformation vorgesehen ist und zumindest einer der Kommunikationskanäle einer ersten Sicherungsgruppe zugehört,
wobei im betriebsbereiten Zustand der Zwischenschnittstelle der Austausch der Kommunikationsinformation über Kommunikationswege erfolgt, welche in Gruppen von jeweils einem oder mehreren Kommunikationswegen zusammengefasst sind, und jede Kommunikationsweggruppe zumindest vorübergehend einem Kommunikationskanal zugeordnet ist, wobei eine Anzahl vorbestimmter Kommunikationswege in einer eigenen Kommunikationsweggruppe zusammengefaßt ist, welcher die erste Sicherungsgruppe zugeordnet ist.

Als Knotenpunkte für Telekommunikationsverbindungen sind in Telekommunikationsnetzen Netzwerkelemente vorgesehen. Ein Netzwerkelement kann als Anschaltenetz zur Anbindung von Teilnehmerendanschlüsse in das Netz und/oder als Vermittlungsstelle zur Verknüpfung von Teilnehmerverbindungen untereinander bzw. mit anderen Netzknoten oder Telekommunikationsnetzen eingerichtet sein. Zu diesem Zweck sind die Netzwerkelemente untereinander über Zwischenstrecken vernetzt, welche die für die Herstellung und Erhaltung der Telekommunikationsverbindungen nötigen Übertragungskapazitäten aufweisen. Für die Aufgaben der Steuerung und Verwaltung der Zwischenstrekken sind die Zwischenstrecken, die je zwei Netzwerkelemente verbinden, zu einer Zwischenschnittstelle zusammengefaßt, wobei ein Zwischenschnittstelle je nach Organisationsstruktur eine bis mehrere Zwischenstrecken umfassen kann. Gegebenenfalls, z.B. bei entsprechend großer Zwischenstrecken-Kapazität oder bei besonderen Netzarchitekturen, können zwei Netzwerkelemente auch durch zwei oder mehr Zwischenschnittstellen vernetzt werden.

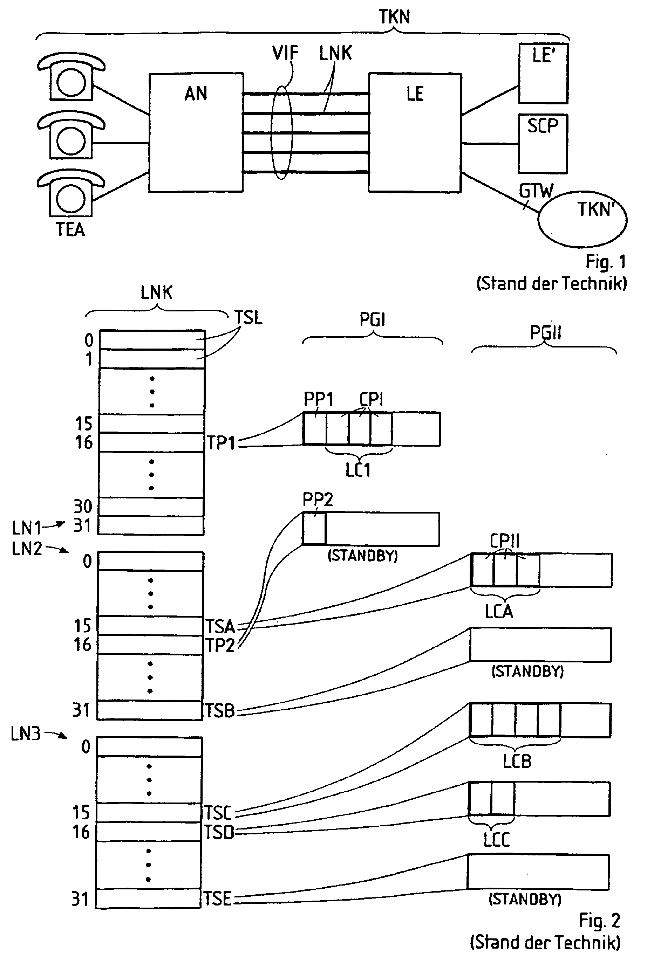

Die Verwaltung der Zwischenschnittstellen während des Betriebes erfolgt weitgehend in den Netzwerkelementen selbst. Für die Architektur, Steuerung und Verwaltung von Zwischenschnittstellen empfohlene Strukturen sind in den Normen des Europäischen Normeninstituts für Telekommunikation (ETSI) für die sogenannte V-Schnittstellen und insbesondere der V5.2-Schnittstelle festgelegt. Die Normen ETS 300 324-1, 'Signalling Protocols and Switching (SPS); V interfaces at the digital Local Exchange (LE), V5.1 interface for the support of Access Network (AN)' und, 'Signalling Protocols and Switching (SPS); V interfaces at the digital Local Exchange (LE), V5.2 interface for the support of Access Network (AN)', 2. Ausgabe, beschreiben die Gestaltung der V5.2-Zwischenschnittstelle. Soweit es für das Verständnis der Erfindung erforderlich ist, wird im folgenden unter Zuhilfenahme der Fig. 1 und 2 die wesentlichen Merkmale einer Zwischenschnittstelle am Beispiel einer V5.2-Schnittstelle kurz dargestellt; für weitergehende Information sei auf die genannten Normen verwiesen.

Fig. 1 zeigt eine beispielhafte Anordnung von Netzwerkelementen eines Telekommunikationsnetzes TKN, die durch eine V5.2-Schnittstelle VIF verbunden sind. Das erste Netzwerkelement, in Fig. 1 auf der linken Seite gezeigt, ist ein Anschaltenetz AN ('Access Network'), welches als Konzentrator für Teilnehmerendanschlüsse TEA dient. Das zweite, in Fig. 1 rechte Netzwerkelement ist eine Vermittlungsstelle LE ('Local Exchange') und über netzinterne Schnittstellen mit anderen Netzknoten des Telekommunikationsnetzes TKN, wie z.B. anderen Vermittlungsstellen LE' oder einer Dienstesteuerstation SCP ('Service Control Point'), oder über ein sogenanntes Gateway GTW mit einem anderen Telekommunikationsnetz TKN' verbunden. Es versteht sich, daß Fig. 1 nur ein einfaches Beispiel darstellt, das lediglich die für das Verständnis der Erfindung notwendigen Merkmale aufweist. Ein Netzwerkelement, wie etwa ein Anschaltenetz oder ein Vermittlungsamt, kann über mehrere Zwischenschnittstellen mit anderen Netzwerkelementen und insbesondere auch mit einem oder mehreren Netzwerkelementen über jeweils mehr als eine Zwischenschnittstelle verbunden sein, wobei auch nicht sämtliche Zwischenschnittstellen als V5.2-Schnittstellen ausgeführt sein müssen.

Wie in Fig. 1 angedeutet, ist die V5.2-Schnittstelle VIF unter Verwendung eine Anzahl von Zwischenstrecken in Form sogenannter V5-Links LNK, die als eine für 2 Mbit/s ausgelegte Verbindungsleitung aufzufassen sind, realisiert. Die oben genannten ETSI-Standards beschränken die Zahl der jeweils zu einer V5.2-Schnittstelle VIF zusammengefaßten Links auf maximal 16. Jedes Link LNK weist nach den ETSI-Standards 32 Zeitschlitze zu je 64 kBit/s auf, die von 0 bis 31 durchnumeriert sind. Zeitschlitz 0 jedes Links wird für die Synchronisation verwendet. Die übrigen Zeitschlitze dienen dem Informationsaustausch. Hierzu gehört natürlich der Trägerverkehr, d.h. der Austausch der Nutzinformation der Teilnehmerverbindungen; einige Zeitschlitze werden jedoch für den Austausch sogenannter Kommunikationsinformation verwendet. Die Kommunikationsinformation wird zwischen den beiden Netzwerkelementen AN,LE für die Zwecke der Steuerung und Verwaltung der Zwischenschnittstelle VIF und des über sie laufenden Trägerverkehrs ausgetauscht. Ein Zeitschlitz, welcher für den Informationsaustausch von Trägerverkehr oder Kommunikationsinformation verwendet wird, wird mit einem Übertragungskanal oder kurz Kanal ('channel') identifiziert; da die begriffliche Unterscheidung zwischen einem Zeitschlitz und dem ihm zugeordneten Kanal für das Verständnis der Erfindung von untergeordneter Bedeutung ist, werden im folgenden die beiden Begriffe unterschiedslos gebraucht.

Die über eine Zwischenschnittstelle VIF übertragene Kommunikationsinformation wird in sogenannte "Sicherungsgruppen" ('protection groups') aufgeteilt. Jeder Zwischenschnittstelle ist je eine Sicherungsgruppe des Typs 1 und des Typs 2 zugeordnet. Die Typ-1-Sicherungsgruppe PGI umfaßt die Kommunikationsprotokolle für die Steuerung des betriebstechnischen Zustandes der Anschlüsse bzw. Verbindungen und der Links sowie für die Steuerung der Vergabe der Nutzkanäle (sogenanntes Control-Protokoll, Link-Control-Protokoll, BCC-Protokoll); diese Protokolle werden auch als "vitale" Protokolle bezeichnet. Für die Typ-1-Sicherungsgruppe sind zwei Zeitschlitze reserviert, die aus Sicherheitsgründen verschiedenen Links angehören. In diesen zwei Links LN1,LN2 wird jeweils Zeitschlitz 16 für die Typ-1-Sicherungsgruppe verwendet. Die zwei für die Typ-1-Sicherungsgruppe verwendeten Links werden jeweils als primäres Link LN1 und sekundäres Link LN2 bezeichnet. Die Übertragung des PSTN-Protokolls für die Signale des PSTN-Netzes und der ISDN-Protokolle der ISDN-Dienstkanäle ('D-channels') und ISDN-Paketdatenkanäle ('p-channels') werden der Typ-1- und/oder der Typ-2-Sicherungsgruppe zugeordnet. (Die ISDN-Kanäle entsprechen Übertragungswegen und sind nicht mit den Übertragungskanälen, insbesondere den weiter unten erläuterten C-Kanälen, zu verwechseln!) Für die Typ-2-Sicherungsgruppe PGII können je nach aktuellem Bedarf die Zeitschlitze 15 und 31 des primären Links LN1 und des sekundären Links LN2 sowie die Zeitschlitze 16, 15 und 31 der übrigen Links der Zwischenschnittstelle VIF reserviert werden, also bis zu 46 Zeitschlitze, wobei die gemeinsame Verwendung eines Zeitschlitzes für die Übertragung der Typ-1-Sicherungsgruppe und der Typ-2-Sicherungsgruppe nicht gestattet ist - ebensowenig wie die gemeinsame Verwendung von Zeitschlitzen für Trägerverkehr und die Übertragung einer Sicherungsgruppe.

Jeder Kanal kann die Übertragung mehrerer Übertragungswege ('paths') aufnehmen. Ein Kanal, welcher für die Übertragung von Kommunikationsinformation vorgesehen ist, wird als Kommunikationskanal oder C-Kanal ('communication channel', 'C-channel'), genannt; aufgrund seiner festen Zuordnung zu einem ("physikalischen") Zeitschlitz wird ein solcher C-Kanal auch als "physikalischer C-Kanal" bezeichnet. Ein Übertragungsweg eines C-Kanals, der somit zum Austausch von Kommunikationsinformation dient, wird als Kommunikationsweg oder C-Weg ('communication path', 'C-path') bezeichnet. In einem C-Weg wird jeweils ein Kommunikationsprotokoll übertragen, wie z.B. das Protokolls eines ISDN-Dienstkanals, und ein C-Weg ist dem betreffenden Kommunikationsprotokoll fest zugeordnet. Dagegen kann die Zuordnung der C-Wege zu den C-Kanälen veränderlich sein, z.B. wird im Falle der Störung eines Zeitschlitzes die dem gestörten Zeitschlitz bzw. C-Kanal zugeordnete Übertragung der C-Wege auf einen (unter Umständen auch mehrere) anderen Zeitschlitz umgelegt.

Die C-Wege sind zum Zwecke der Verwaltung der Zuordnung zu Zeitschlitzen gruppenweise zusammengefaßt, wobei eine solche Gruppe einen oder mehrere C-Wege umfassen kann. Diese Gruppen von C-Wegen dienen als jene Einheit, welche den physikalischen C-Kanälen zugeordnet wird, und werden dementsprechend in den genannten ETSI-Standards als "logische C-Kanäle" bezeichnet; im folgenden wird statt dessen, auch aus Gründen der deutlicheren Unterscheidung, die Bezeichnung Kommunikations- oder C-Weggruppe oder auch kurz Weggruppe verwendet werden. Es erfolgt also stets die Zuordnung von C-Wegen zu Zeitschlitzen indirekt, nämlich durch die Zuordnung jeweils einer C-Weggruppe zu einem C-Kanal, d.h. in anderen Worten die Zuordnung eines logischen zu einem physikalischen C-Kanal. Ein C-Kanal, welchem eine C-Weggruppe zugeordnet ist - der C-Kanal "trägt" die C-Weggruppe -, heißt aktiv. Die übrigen, als Standby-C-Kanäle bezeichneten C-Kanäle werden zumindest vorübergehend nicht für den Nachrichtenaustausch genutzt. Die Zuordnung der C-Weggruppen zu C-Kanälen kann sich während des Betriebs der Schnittstelle ändern, beispielsweise aufgrund einer Störung oder auf einen Befehl des Operatorpersonals hin. Dabei wird ein Standby-C-Kanal, welchem eine C-Weggruppe zugewiesen wird, zu einem aktiven C-Kanal und umgekehrt ein aktiver C-Kanal, sobald dieser keine C-Weggruppe mehr trägt, zu einem Standby-C-Kanal.

In Fig. 2 ist die innere Struktur des primären und des sekundären Links LN1,LN2 sowie eines weiteren Links LN3 der Zwischenschnittstelle VIF symbolisch dargestellt. Für die C-Wege der Typ-1-Sicherungsgruppe ist vorgeschrieben, daß sie stets zu einer C-Weggruppe zusammengefaßt sind. Die C-Wege CPI der Typ-1-Sicherungsgruppe PGI werden somit stets gemeinsam, also in demselben Kanal TP1, übertragen. Dieser Kanal TP1 ist entsprechend dem oben Gesagten der Zeitschlitz 16 des primären Links LN1, während Zeitschlitz 16 des sekundären Links als Standby-C-Kanal TP2 der Typ-1-Sicherungsgruppe PGI dient. Die übrigen als C-Kanäle vorgesehenen Zeitschlitze sind der Typ-2-Sicherungsgruppe zugeordnet. Falls eine Störung des primären Links LN1 eintreten sollte, werden die Typ-1-C-Wege CPI auf den bisher freigehaltenen Zeitschlitz TP2 des sekundären Links LN2 umgeschaltet, wodurch das sekundäre Link zum primären wird. An dieser Stelle sei darauf hingewiesen, daß die Ziffern 1 und 2 in den Bezugszeichen sich nicht auf den Typ einer Sicherungsgruppe beziehen, sondern jeweils auf das primäre Link LN1 bzw. sekundäre Link LN2, hinweisen.

In Fig. 2 sind in einer beispielhaften Belegung einige der Typ-2-Sicherungsgruppe PGII zugeordnete C-Kanäle TSA,TSC,TSD gezeigt, wie hier Zeitschlitz 15 des sekundären Links LN2 sowie Zeitschlitze 15 und 16 des dritten Links LN3, die jeweils eine C-Weggruppe LCA,LCB,LCC mit jeweils einem Satz von C-Wegen CPII tragen. Andere C-Kanäle TSB,TSE der Typ-2-Sicherungsgruppe PGII stehen im Standby. Die Zuordnung der C-Weggruppen LCA,LCB,LCC zu den C-Kanälen TSA,...,TSE ist grundsätzlich frei und kann sich im Laufe des Schnittstellenbetriebes durch Sicherungsschalten ('protection switch-over'), in welchem eine C-Weggruppe zu einem bisher im Standby stehenden C-Kanal zugeordnet wird, ändern.

Für die Koordinierung der Zuordnung der C-Weggruppen und des Sicherungsschaltens wird ein zusätzliches Protokoll, das Sicherungsprotokoll ('protection protocol'), simultan auf beiden der Typ-1-Sicherungsgruppe zugeordneten Zeitschlitzen TP1,TP2 über eigene Übertragungswege PP1,PP2 ausgetauscht, die im folgenden Sicherungswege genannt werden. Wie am Beispiel des Standby-Sicherungswegs PP2 auf dem sekundären Link LN2 verdeutlicht, gehören die Sicherungswege im allgemeinen nicht einer C-Weggruppe an, sondern sind nach der Sicherungsarchitektur der V5.2-Schnittstelle direkt den für die Typ-1-Sicherungsgruppe PGI reservierten Zeitschlitzen TP1,TP2 zugeordnet. Für nähere Angaben betreffend das Sicherungsprotokoll und die Zuteilung von C-Wegen zu C-Weggruppen sowie letzterer zu C-Kanälen sei auf die ETSI-Norm ETS 300 347-1, und darin insbesondere auf Kapitel 18, verwiesen.

Die beschriebenen Zusammenhänge gelten für die Zwischenschnittstelle im Betriebszustand. Für das Hochfahren der Zwischenschnittstelle sind im Annex C der ETSI-Norm ETS 300 347-1, insbesondere unter Punkt 13, (im folgenden kurz als "ETSI-Annex C" bezeichnet) eine Abfolge von Schritten definiert, in welcher zuerst für die in Betrieb zu nehmenden C-Wege die Sicherungsschicht ('Data Link Layer', Schicht 2 nach dem OSI-Schichtenmodell, vgl. Spezifikation X.200 des Internationalen Telekommunikationsverbandes ITU) der sogenannten LAPV5 ('Link Access Protocol for V5') nach den ETSI-Normen ETS 300 347-1, Kapitel 8, sowie ETS 300 125, aktiviert wird und sodann aufgrund der arbeitsbereiten LAPV5 die Kommunikationsprotokolle, gewöhnlicherweise beginnend mit dem Sicherungsprotokoll, gestartet werden. Bei der Inbetriebnahme der LAPV5-Sicherungsschicht wird - neben einer fest vorgegebenen Gruppierung der C-Wege zu den C-Weggruppen und der Festlegung der als C-Kanäle vorgesehenen Zeitschlitze - ein im vorhinein festgelegtes Ausgangsprofil ('default profile') verwendet, welches eine anfängliche Zuordnung der C-Weggruppen zu den C-Kanälen definiert. Das Ausgangsprofil ist lediglich zum Zeitpunkt des Hochfahrens maßgeblich, im Laufe des Betriebs kann ja die Zuordnung der C-Weggruppen geändert werden. Selbstverständlich müssen sowohl die Vermittlungsstelle als auch das Anschaltenetz identische Kopien des Ausgangsprofils aufweisen.

In der WO 98/41037 ist offenbart, beim Hochfahren einer V5-Schnittstelle zunächst die Verfügbarkeit des primären Links und dann der übrigen Links, insbesondere des sekundären Links, zu überprüfen, sodann den Nachrichtenaustausch über das Sicherungsprotokoll zu etablieren, wobei gegebenenfalls zwischen dem primären und dem sekundären Link umgeschaltet wird. Danach läuft die Aktivierung der weiteren Kommunikationswege nach bekannten Verfahren (also standardgemäß) ab; falls ein Kommunikationsweg nicht wie vorgesehen aktiviert werden kann, wird für diesen ein Switchover, also ein Umschalten auf einen anderen Kommunikationskanal durchgeführt. Dass Ausgangsprofil, insbesondere dessen Vermeidung, ist in dieser Druckschrift nicht angesprochen.

Die Verwendung eines Ausgangsprofils zur Festlegung der anfänglichen Zuordnung der C-Weggruppen bringt jedoch die Gefahr mit sich, daß z.B. bei einseitiger Betriebsunterbrechung und erneutem Hochfahren der Zwischenschnittstelle seitens eines der beiden Netzknoten die Zuordnung nicht mit jener des anderen Netzknotens kompatibel ist. Deshalb sind im ETSI-Annex C zusätzliche Zeitglieder vorgesehen, nämlich die sogenannten TC8- und TC9-Zeitglieder, welche beim Neustart eines Netzknotens für einen Rückfall auch des anderen Netzknotens auf das Ausgangsprofil dadurch sorgen sollen, daß der Nachrichtenaustausch über die Zwischenschnittstelle so lange unterbrochen ist, bis der andere Netzknoten die Versuche zur Kommunikationsherstellung abbricht und ebenfalls einen Neustart für die Zwischenschnittstelle initiiert. Beispielsweise wird durch das TC9-Zeitglied eine Totzeit von 95 s definiert, welche vor einem vom Bedienpersonal verlangten Wiederhochfahren der Schnittstelle seitens eines Netzknotens verstreichen muß. Diese bekannte Lösung ist nicht nur wegen der Verwendung eines nur kurzzeitig benötigten Ausgangsprofils sowie zusätzlicher Zeitglieder kompliziert und aufwendig, sondern benötigt beim Neustart der Zwischenschnittstelle aufgrund der vorgesehenen Totzeiten viel Zeit. Da zudem beim Hochfahren die Korrektheit der Zuordnung nicht überprüft wird, verbleibt eine restliche Gefahr, daß beim Hochfahren der Zwischenschnittstelle kein stabiler Betriebszustand erreicht wird. Zudem wird während des Hochfahrens der Schnittstelle das Übereinstimmen der Anfangszuordnungen der beiden Netzwerkelemente zwar unterstellt, jedoch nicht überprüft.

Es ist daher Aufgabe der Erfindung, das Hochfahren einer Zwischenschnittstelle, insbesondere einer V5.2-Schnittstelle nach den oben genannten ETSI-Normen, derart durchzuführen, daß ein stabiler Betriebszustand zuverlässig erreicht wird, wobei die genannten Fehlerquellen ausgeschlossen sind und insbesondere ein Ausgangsprofil nicht benötigt wird.

Diese Aufgabe wird von einem Verfahren zum Hochfahren einer Zwischenschnittstelle (VIF) der eingangs genannten Art gelöst, bei welchem erfindungsgemäß
a) in dem Kommunikationskanal (TP1) der ersten Sicherungsgruppe bzw. einem der Kommunikationskanäle der ersten Sicherungsgruppe ein primärer Kommunikationsweg (PP1) eingerichtet wird, sodann
b) die Kommunikationsweggruppe (LC1) der ersten Sicherungsgruppe dem den primären Kommunikationsweg enthaltenden Kommunikationskanal (TP1) aufgrund von Sicherungsschaltnachrichten, welche über den primären Kommunikationsweg (PP1) ausgetauscht werden und die Zuordnung der Kommunikationsweggruppen zu Kommunikationskanälen betreffen, zugeordnet wird und, insofern dies erfolgreich geschehen ist,
c) die Kommunikationswege der ersten Sicherungsgruppe (PGI) für den Austausch von Kommunikationsinformation freigegeben werden.

Durch diese Lösung wird durch die Verwendung von Sicherungsschaltnachrichten eine koordinierte Inbetriebnahme des Verkehrs der Kommunikationsinformation ermöglicht. Analog zum Sicherheitsschalten während des Betriebs der Zwischenschnittstelle wird auch beim Hochlaufen der Schnittstelle jener Zeitschlitz, auf dem die vitalen Protokolle in Betrieb genommen werden sollen, über das Sicherungsprotokoll bzw. ein anderes primäres Kommunikationsprotokoll zwischen den Netzwerkelementen abgestimmt. Vor der Inbetriebnahme einer Kommunikationsweggruppe wird stets über das primäre Protokoll der zu verwendende Zeitschlitz bzw. Kommunikationskanal bestimmt. Ein Ausgangsprofil ist hierbei nicht erforderlich; lediglich die Information betreffend die Identifikation der Kommunikationskanäle der ersten Sicherungsgruppe wird benötigt, welche ohnedies aus einer anderen Quelle ermittelt wird. Weitere Vorteile werden anhand des Ausführungsbeispieles genannt.

In einer bevorzugten Ausführungsform der Erfindung wird, sofern der ersten Sicherungsgruppe (PGI) mehrere Kommunikationskanäle (TP1,TP2) zugeordnet sind, der primäre Sicherungsweg (PP1) in jenem Kommunikationskanal eingerichtet, welcher als erster unter den genannten Kommunikationskanälen ein arbeitsbereites Protokoll für den primären Kommunikationsweg zwischen den zwei Netzwerkelementen (AN,LE) bereitstellt. Dies garantiert eine zugleich rasche und zuverlässige Durchführung des Hochfahrens.

Es ist weiters günstig, wenn der primäre Kommunikationsweg ein Sicherungsweg (PP1) ist, welcher in dem zumindest einen Kommunikationskanal (TP1,TP2) der ersten Sicherungsgruppe für den Austausch eines Sicherungsprotokolles betreffend die Zuordnung der Kommunikationsweggruppen zu Kommunikationskanälen eingerichtet ist, und die Sicherungsschaltnachrichten über das Sicherungsprotokoll ausgetauscht werden. Dies ermöglicht die Zuordnung der Kommunikationsweggruppen während des Hochfahrens unter Verwendung von Nachrichten und Signalen, welche in den oben genannten ETSI-Normen bereits definiert sind, und gestattet somit eine Kompatibilität zu bisher bekannten V5.2-Schnittstellen.

Um auch für die übrigen, der ersten Sicherungsgruppe nicht zugehörenden Kommunikationsweggruppen den Ablauf des Hochfahrens zu verbessern, ist es vorteilhaft, wenn nach der Freigabe der ersten Sicherungsgruppe (PGI) für jede oder zumindest eine der übrigen Kommunikationsweggruppen (LCA,LCB)
a) die Kommunikationsweggruppe (LCA) einem der ersten Sicherungsgruppe nicht zugehörenden Kommunikationskanal (TSA) aufgrund von Sicherungsschaltnachrichten, welche über die erste Sicherungsgruppe (PGI) ausgetauscht werden, zugeordnet wird und, insofern dies erfolgreich geschehen ist,
b) die Kommunikationswege (CPII) der Kommunikationsweggruppe (LCA) für den Austausch von Kommunikationsinformation freigegeben werden.

Dadurch können die oben beschriebenen Vorteile auch bei der Inbetriebnahme dieser Weggruppen erzielt werden.

Die Erfindung samt weiterer Vorzüge wird im folgenden anhand eines Ausführungsbeispieles, welches das erfindungsgemäße Hochfahren einer V5.2-Schnittstelle seitens eines der Netzwerkelemente betrifft, näher erläutert. Hierzu werden die beigefügten Figuren herangezogen, welche zeigen:
- Fig. 1: einen beispielhaften, schematischen Ausschnitt aus einem Telekommunikationsnetz mit zwei durch eine V5.2-Schnittstelle verbundenen Netzwerkelementen;
- Fig. 2: die innere Struktur von drei der Links der in Fig. 1 gezeigten Zwischenschnittstelle; sowie
- Fig. 3: ein Ablaufdiagramm des Hochfahrens der V5.2-Schnittstelle in den Betriebszustand.

Die in der Einleitung mit Hilfe der Fig. 1 und 2 beschriebene Architektur der V5.2-Schnittstelle VIF ist von der Erfindung nicht betroffen. Für eine gegenüber der Einleitung detailliertere Beschreibung der V5.2-Schnittstelle sei nochmals auf die beiden ETSI-Normen ETS 300 324-1 und ETS 300 347-1 verwiesen.

Das Hochfahren der V5.2-Schnittstelle VIF nach der Erfindung erfolgt ausgehend von einem Ausgangszustand, worin entsprechend den Vorbedingungen b) bis e) des ETSI-Annex C, Pkt.13, sämtliche Zeitschlitze freigegeben, die Bitübertragungsschicht ('physical layer', Schicht 1 nach dem OSI-Schichtenmodell) sowie die Übertragung der Rahmenbegrenzungs-Flags für zumindest einen der Primärkanäle (siehe unten) arbeitsbereit sind, die Link-Steuermaschinen ('link control FSMs') normgemäß initialisiert und der Austausch von Kommunikationsinformation normgemäß außer Betrieb bzw. blockiert ist.

Weiters wird das Vorliegen einer Festlegung, welche z.B. als eine vorkonfigurierte, in je einer Kopie sowohl auf seiten des Anschaltenetz AN als auch der Vermittlungsstelle LE vorliegende Kopie gegeben sein kann, betreffend die als C-Kanäle vorgesehenen Zeitschlitze vorausgesetzt. Beispielsweise ist diese Festlegung eine Liste, die für jeden vorgesehenen C-Kanal die Nummer des Links und des Zeitschlitzes sowie eine Angabe, ob der C-Kanal der Typ-1-Sicherungsgruppe PGI oder der Typ-2-Sicherungsgruppe PGII zugeordnet ist, enthält. Die der Typ-1-Sicherungsgruppe zugeordneten C-Kanäle werden im folgenden der Kürze halber als Sicherungskanäle bezeichnet. Wie bereits erwähnt, müssen gemäss den ETSI-Normen zwei Sicherungskanäle TP1,TP2 jeweils in Zeitschlitz 16 von zwei der Links LNK der V5.2-Schnittstelle im voraus festgelegt sein (vgl. hierzu auch Fig. 2); die tatsächliche Anzahl und Zuordnung der Sicherungskanäle ist für die Erfindung jedoch nicht von Belang. Darüber hinaus ist, im Unterschied zu der ETSI-Norm, für die Erfindung das Vorliegen eines Ausgangsprofils nicht erforderlich.

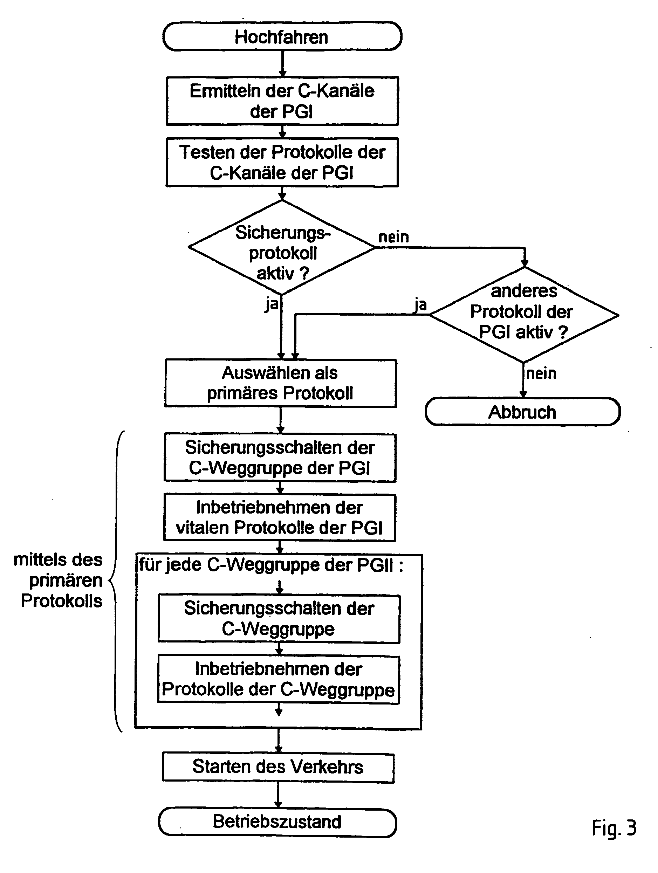

Der im folgenden dargestellte erfindungsgemäße Ablauf ist in der Fig. 3 dargestellt, wobei zugleich auf die in Fig. 2 gezeigte, beispielhafte, sich beim Hochfahren ergebende Schnittstellenkonfiguration Bezug genommen wird. Ausgehend von dem genannten Ausgangszustand wird zuerst seitens des Netzwerkelementes, von welchem die V5.2-Schnittstelle hochgefahren wird, bestimmt, für welche Zeitschlitze Sicherungskanäle aufgrund der genannten Festlegung vorgesehen sind.

Aus den so bestimmten Sicherungskanälen TP1,TP2 wird sodann ein Kanal als primärer Sicherungskanal TP1 ausgewählt, in dem wie weiter unten erläutert ein primärer Kommunikationsweg PP1 für die Signalisierung der Sicherungsschaltungen der nachfolgenden Schritte eingerichtet wird.

Für die Auswahl des primären Sicherungskanals werden die der Typ-1-Sicherungsgruppe zugehörenden Protokolle in den Sicherungskanälen TP1,TP2 darauf geprüft, ob diese arbeitsbereit sind. Günstigerweise wird der Protokollbetrieb wegen seiner besonderen Bedeutung im Zusammenhang mit der Sicherungsschaltung vorrangig auf das Sicherungsprotokoll untersucht, und es wird jener Sicherungskanal ausgewählt, welcher als erster der Sicherungskanäle ein arbeitsbereites Protokoll für den primären Kommunikationsweg, also in diesem Falle ein arbeitsbereites Sicherungsprotokoll, zwischen den zwei Netzwerkelementen bereitstellt. Auf diese Weise ist eine rasche Durchführung des Hochfahrens unter Verwendung von in den ETSI-Normen bereits vorgegebener Nachrichten ermöglicht.

Sollte es nicht möglich sein, über einen der Sicherungskanäle ein funktionsbereites Sicherungsprotokoll aufzubauen, so besteht in den genannten ETSI-Normen entsprechender Weise die Alternative zur Verfügung, an Stelle des Sicherungsprotokoll ein anderes der "vitalen" Protokolle der Typ-1-Sicherungsgruppe zu verwenden und als primäres Kommunikationsprotokoll auszuwählen, sofern eines dieser vitalen Protokolle arbeitsbereit ist. Da in diesem Fall mangels eines funktionsbereiten Sicherungsprotokolles ein Sicherungsschalten auf der V5.2-Schnittstelle nicht oder nur eingeschränkt möglich ist und unter Umständen auch mit einer Beeinträchtigung der Informationsübertragung auf anderen Übertragungswegen zu rechnen ist, ist diese Möglichkeit weniger für den Normalbetrieb als vielmehr für besondere Betriebsweisen wie z.B. zur Sicherung eines reduzierten Notverkehrs in Betracht zu ziehen.

Die Voraussetzungen für die Aktivierung eines Sicherungskanales für die Typ-1-Sicherungsgruppe als primärer Sicherungskanal TP1 sind somit
(1) die Funktionstüchtigkeit der Bitübertragungsschicht des betreffenden Links LN1;
(2) die zuverlässige Übertragung der sogenannten HDLC-Flags, welche zur Rahmenbegrenzung der Sicherungsschicht-Nachrichteneinheiten dienen; sowie
(3) das Vorliegen eines arbeitsbereiten Sicherungsprotokolles, wobei ersatzweise auch ein anderes vitales Protokoll verwendet werden kann.

Die ersten beiden Bedingungen sind aufgrund des oben beschriebenen Ausgangszustandes bereits gewährleistet. Zu der zweiten Bedingung ist noch anzumerken, daß die Überprüfung der Übertragung der Rahmenbegrenzung für den Zeitschlitz 16 des betreffenden Links für den Zweck der Typ-1-Sicherungsgruppe ausreichend ist; in der Praxis kann davon ausgegangen werden, daß bei fehlerfreier Rahmenübertragung für Zeitschlitz 16 auch die Rahmenübertragung der übrigen Zeitschlitze des Links intakt ist. Die dritte Bedingung geht über die ETSI-Normen hinaus und ergibt sich aus den Erfordernissen der Durchführbarkeit der folgenden Schritte nach dem erfindungsgemäßen Verfahren.

Für das als primäres Protokoll ausgewählte Protokoll wird ein primärer Kommunikationsweg PP1 auf dem primären Sicherungskanal TP1 eingerichtet. Dadurch wird zugleich jener Link, in welchem der primäre Kommunikationsweg PP1 bzw. Sicherungskanal TP1 eingerichtet ist, zum primären Link LN1. Nach diesem Schritt ist mit dem primären Kommunikationsweg ein Kommunikationsweg zwischen den beiden Netzwerkelementen AN,LE über die V5.2-Schnittstelle VIF etabliert, über den nun Sicherungsschaltnachrichten zur Durchführung von Sicherungsschaltungen für C-Weggruppen ausgetauscht werden können.

Sodann wird für die C-Weggruppe LC1 der Typ-1-Sicherungsgruppe PGI ein Sicherungsschaltverfahren durchgeführt, bei welchem - im Sinne der ETSI-Normen - die verbleibenden C-Wege der Typ-1-Sicherungsgruppe mit den "vitalen" Protokollen dem primären Sicherungskanal TP1 auf dem primären Link LN1 zugeordnet werden. Dabei wird erfindungsgemäß für die Übertragung der Sicherungsschaltnachrichten der primäre Kommunikationsweg PP1 verwendet. Der Vorgang des Sicherungsschaltens erfolgt in Übereinstimmung mit den ETSI-Normen, insbesondere ETS 300 347-1, Kapitel 18.

Nach erfolgtem Sicherungsschalten der Typ-1-Sicherungsgruppe werden nach der in den ETSI-Normen vorgesehenen Art die zugehörenden Datenwege für die "vitalen" Protokolle in Betrieb genommen und die entsprechenden C-Wege für den Austausch der Kommunikationsinformation freigegeben.

Das Sicherungsschalten und die Inbetriebnahme der Datenwege wird anschließend für die weiteren vorgesehenen C-Weggruppen LCA,...,LCC durchgeführt. Die Anzahl der C-Weggruppen und die vorgesehene Zuordnung zu den C-Kanälen kann unter Verwendung eines Ausgangsprofils erfolgen. Dies ist jedoch nicht erforderlich, da die Zuordnung ohnedies die tatsächlich funktionsbereiten C-Kanäle berücksichtigen muß und die Reihenfolge der zugeordneten C-Kanäle an sich beliebig ist, wenngleich in ETS 300 347-1, Abschnitt 8.4 bzw. 18.1.4, eine bevorzugte Reihenfolge beschrieben ist, die selbstverständlich auch hier befolgt werden kann.

Für eine derartige C-Weggruppe, beispielsweise die C-Weggruppe LCA der Typ-2-Sicherungsgruppe PGII, wird zuerst ein Sicherungsschaltverfahren für einen freien C-Kanal TSA - wiederum im Sinne der ETSI-Normen - durchgeführt. Dabei wird für die Übertragung der Sicherungsschaltnachrichten die Typ-1-Sicherungsgruppe, vorzugsweise selbstverständlich der primäre Kommunikationsweg PP1, verwendet. Der Vorgang des Sicherungsschaltens erfolgt in Übereinstimmung mit den ETSI-Normen, insbesondere ETS 300 347-1, Kapitel 18. Nach erfolgtem Sicherungsschalten der C-Weggruppe LCA werden nach der in den ETSI-Normen vorgesehenen Art die der C-Weggruppe LCA zugehörenden Protokolle in Betrieb genommen und die entsprechenden C-Wege für den Austausch der Kommunikationsinformation freigegeben. Dieser Teilablauf wird für die weiteren vorgesehenen C-Weggruppen LCB,LCC wiederholt.

Nach der Inbetriebnahme sämtlicher Sicherungsgruppen PGI,PGII kann nun der Datenverkehr über die V5.2-Schnittstelle VIF gestartet werden; der Hochlauf ist ausgeführt und die Schnittstelle befindet sich im Betriebszustand.

Durch das beschriebene Verfahren nach der Erfindung ergibt sich als wesentlicher Vorteil die zwischen den Netzwerkelementen AN,LE koordinierte Inbetriebnahme des Nachrichtenverkehrs über die für die Typ-2-Sicherungsgruppe PGII vorgesehenen C-Kanäle bzw. Zeitschlitze TSA,...,TSE der V5.2-Schnittstelle VIF. Die korrekte, für beide Netzwerkelemente zuverlässig übereinstimmende Zuordnung der C-Weggruppen zu C-Kanälen ist eine Konsequenz des erfindungsgemäßen Ablaufs und muß nicht durch ein Ausgangsprofil vorbereitet werden. Auf diese Weise ist eine mögliche Fehlerquelle ausgeschaltet. Die Verwendung von Sicherungsschaltnachrichten entsprechend der ETS 300 347-1 bringt zudem eine erhöhte Sicherheit dadurch mit sich, daß die Inbetriebnahme durch das jeweils andere Netzwerkelement LE,AN bestätigt wird.

Darüber hinaus gestattet die Erfindung eine vereinfachte technische Realisierung, da sowohl im Hochlauf als auch im Betrieb derselbe Mechanismus für die Inbetriebnahme bzw. Verwaltung der Kommunikationsprotokolle verwendet werden kann. Zudem wird die Zuverlässigkeit des Hochlaufs erhöht, was zu einer Verringerung der zu erwartenden Ausfallzeiten führt.

Ein weitere vorteilhafte Folge der Erfindung ist die, daß die TC8- und TC9-Zeitglieder entfallen können. Wie aus dem ETSI-Annex C, Punkt 29, hervorgeht, wird im Falle eines Neustarts der V5.2-Schnittstelle VIF je nach auslösendem Ereignis (z.B. Ablauf des TC2-Zeitgliedes oder Neustartbefehl durch das Bedienpersonal) das Ablaufen des TC8- oder des TC9-Zeitglieds vor Beginn des Wiederhochlaufens abgewartet; diese Zeitglieder sollen dabei sicherstellen, daß beide Netzwerkelemente AN,LE ein Wiederhochlaufen unter Verwendung des Ausgangsprofiles durchführen. Da letzteres nach der Erfindung nicht verlangt wird, kann beim Neustart der Wiederhochlauf sofort nach dem auslösenden Ereignis erfolgen. Auf diese Weise gestattet die Erfindung die Vermeidung von Totzeiten beim Hochlaufen der V5.2-Schnittstelle. Zusätzlich ist dadurch die Möglichkeit, die in besonderen Anfangskonstellationen bisher möglich war, eines wiederholten, abwechselnden Neustartens infolge gegenseitiger Auslösung durch die Totzeiten der Zeitgeber ausgeschlossen.

## Patentansprüche

1. Verfahren zum Hochfahren einer Zwischenschnittstelle (VIF) eines Telekommunikationsnetzes (TKN) in ihre Betriebsbereitschaft, über welche zwei Netzwerkelemente (AN,LE), wie z.B. eine Vermittlungsstelle und ein Anschaltenetz, für das Herstellen und Erhalten von Teilnehmerverbindungen des Netzes (TKN) verbunden sind und in welcher
- eine oder mehrere Zwischenstrecken (LNK) vorgesehen sind,
wobei die bzw. jede Zwischenstrecke (LNK) eine Anzahl von Übertragungskanälen (TSL) für den Austausch von Nutzinformation der Teilnehmerverbindungen sowie für den Austausch von Kommunikationsinformation für die Steuerung der Teilnehmerverbindungen und der Verwaltung der Zwischenschnittstelle (VIF) aufweist sowie
- aufgrund einer im voraus festgelegten Konfiguration der Zwischenschnittstelle (VIF) eine Anzahl der Übertragungskanäle als Kommunikationskanäle (TP1,TP2) für den Austausch von Kommunikationsinformation vorgesehen ist und zumindest einer (TP1,TP2) der Kommunikationskanäle einer ersten Sicherungsgruppe (PGI) zugeordnet ist,
wobei im betriebsbereiten Zustand der Zwischenschnittstelle (VIF) der Austausch der Kommunikationsinformation über Kommunikationswege (CPI,CPII) erfolgt, welche in Gruppen (LC1,LCA, LCB) von jeweils einem oder mehreren Kommunikationswegen zusammengefasst sind, und jede Kommunikationsweggruppe zumindest vorübergehend einem Kommunikationskanal zugeordnet ist, wobei eine Anzahl vorbestimmter Kommunikationswege (CPI) in einer eigenen Kommunikationsweggruppe (LC1) zusammengefaßt ist, welcher die erste Sicherungsgruppe (PGI) zugeordnet ist,
**dadurch gekennzeichnet, daß**
a) in dem Kommunikationskanal (TP1) der ersten Sicherungsgruppe bzw. einem der Kommunikationskanäle der ersten Sicherungsgruppe ein primärer Kommunikationsweg (PP1) eingerichtet wird, sodann
b) die Kommunikationsweggruppe (LC1) der ersten Sicherungsgruppe dem den primären Kommunikationsweg enthaltenden Kommunikationskanal (TP1) aufgrund von Sicherungsschaltnachrichten, welche über den primären Kommunikationsweg (PP1) ausgetauscht werden und die Zuordnung der Kommunikationsweggruppen zu Kommunikationskanälen betreffen, zugeordnet wird und, insofern dies erfolgreich geschehen ist,
c) die Kommunikationswege der ersten Sicherungsgruppe (PGI) für den Austausch von Kommunikationsinformation freigegeben werden.

2. Verfahren nach Anspruch 1,
**dadurch gekennzeichnet, daß**, sofern der ersten Sicherungsgruppe (PGI) mehrere Kommunikationskanäle (TP1,TP2) zugeordnet sind, der primäre Sicherungsweg (PP1) in jenem Kommunikationskanal eingerichtet wird, welcher als erster unter den genannten Kommunikationskanälen ein arbeitsbereites Protokoll für den primären Kommunikationsweg zwischen den zwei Netzwerkelementen (AN,LE) bereitstellt.

3. Verfahren nach Anspruch 1 oder 2,
**dadurch gekennzeichnet, daß** der primäre Kommunikationsweg ein Sicherungsweg (PP1) ist, welcher in dem zumindest einen Kommunikationskanal (TP1,TP2) der ersten Sicherungsgruppe für den Austausch eines Sicherungsprotokolles betreffend die Zuordnung der Kommunikationsweggruppen zu Kommunikationskanälen eingerichtet ist, und die Sicherungsschaltnachrichten über das Sicherungsprotokoll ausgetauscht werden.

4. Verfahren nach einem der Ansprüche 1 bis 3,
**dadurch gekennzeichnet, daß** nach der Freigabe der ersten Sicherungsgruppe (PGI) für jede der übrigen Kommunikationsweggruppen (LCA,LCB)
a) die Kommunikationsweggruppe (LCA) einem der ersten Sicherungsgruppe nicht zugehörenden Kommunikationskanal (TSA) aufgrund von Sicherungsschaltnachrichten, welche über die erste Sicherungsgruppe (PGI) ausgetauscht werden, zugeordnet wird und, insofern dies erfolgreich geschehen ist,
b) die Kommunikationswege (CPII) der Kommunikationsweggruppe (LCA) für den Austausch von Kommunikationsinformation freigegeben werden.

## Claims

1. Method for bringing up an intermediate interface (VIF) of a telecommunication network (TKN) to its operational readiness, via which two network elements (AN, LE) such as, e.g. a local exchange and an access network, for establishing and maintaining subscriber connections of the network (TKN) are connected and in which
- one or more links (LNK) are provided, the or each link (LNK) exhibiting a number of transmission channels (TSL) for exchanging user information of the subscriber connections and for exchanging communication information for controlling the subscriber connections and managing the intermediate interface (VIF) and
- due to a preestablished configuration of the intermediate interface (VIF), a number of transmission channels is provided as communication channels (TP1, TP2) for exchanging communication information and at least one (TP1, TP2) of the communication channels is allocated to a first protection group (PGI),
wherein, in the operational state of the intermediate interface (VIF), the communication information is exchanged via communication paths (CPI, CPII) which are combined in groups (LC1, LCA, LCB) of in each case one or more communication paths and each communication path group is allocated at least temporarily to a communication channel, a number of predetermined communication paths (CPI) being combined in a separate communication path group (LC1) which is allocated to the first protection group (PGI), **characterized in that**
a) a primary communication path (PP1) is set up in the communication channel (TP1) of the first protection group or one of the communication channels of the first protection group, then
b) the communication path group (LC1) of the first protection group is allocated to the communication channel (TP1) containing the primary communication path on the basis of protection switching operation messages which are exchanged via the primary communication path (PP1) and relate to the allocation of the communication path groups to communication channels and, if this has been done successfully,
c) the communication paths of the first protection group (PGI) are released for interchanging communication information.

2. Method according to Claim 1, **characterized in that**, if a number of communication channels (TP1, TP2) are allocated to the first protection group (PGI), the primary protection path (PP1) is set up in the communication channel which is the first one among said communication channels to provide an operational protocol for the primary communication path between the two network elements (AN, LE).

3. Method according to Claim 1 or 2, **characterized in that** the primary communication path is a protection path (PP1) which is set up in the at least one communication channel (TP1, TP2) of the first protection group for exchanging a protection protocol relating to the allocation of the communication path groups to communication channels and the protection switching operation messages are exchanged via the protection protocol.

4. Method according to one of Claims 1 to 3, **characterized in that**, after the first protection group (PGI) has been released, for each of the remaining communication path groups (LCA, LCB),
a) the communication path group (LCA) is allocated to a communication channel (TSA) not belonging to the first protection group on the basis of protection switching operation messages which are exchanged via the first protection group (PGI) and, if this has been done successfully,
b) the communication paths (CPII) of the communication path group (LCA) are released for exchanging communication information.

## Revendications

1. Procédé permettant de mettre en route une interface intermédiaire (VIF) d'un réseau de télécommunications (TKN), par l'intermédiaire de laquelle deux éléments de réseau (AN, LE), comme par ex. un centre téléphonique et un réseau d'accès, sont connectés pour établir et maintenir des liaisons d'abonnés du réseau (TKN) et dans laquelle
- une ou plusieurs voies intermédiaires (LNK) sont prévues, la voie intermédiaire resp. chaque voie intermédiaire (LNK) présentant un nombre de canaux de transmission (TSL) pour l'échange d'informations utiles des liaisons d'abonnés ainsi que pour l'échange d'informations de communication pour la commande des liaisons d'abonné et de la gestion de l'interface intermédiaire (VIF) ainsi que,
- en raison d'une configuration déterminée par avance de l'interface intermédiaire (VIF), un nombre de canaux de transmission étant prévu comme canaux de communication (TP1, TP2) pour l'échange d'informations de communication et au moins un (TP1, TP2) des canaux de communication étant affecté à un premier groupe de sécurité (PGI),
dans lequel, à l'état prêt à fonctionner de l'interface intermédiaire (VIF), l'échange des informations de communication étant réalisé par l'intermédiaire de voies de communication (CPI, CPII), lesquelles sont regroupées en groupes (LC1, LCA, LCB) de respectivement une ou plusieurs voies de communication, et chaque groupe de voies de communication étant affecté, au moins provisoirement, à un canal de communication, un nombre de voies de communication prédéterminées (CPI) étant regroupé en un propre groupe de voies de communication (LC1) affecté au premier groupe de sécurité (PGI), **caractérisé en ce que**
a) une voie de communication primaire (PP1) est configurée dans le canal de communication (TP1) du premier groupe de sécurité resp. dans un des canaux de communication du premier groupe de sécurité, qu'ensuite
b) le groupe de voies de communication (LC1) du premier groupe de sécurité est affecté au canal de communication (TP1) contenant la voie de communication primaire, en raison de messages de commutation de sécurité, lesquels sont échangés par l'intermédiaire de la voie de communication primaire (PP1) et concernent l'affectation des groupes de voies de communication à des canaux de communication, et, dans la mesure où ceci est réalisé avec succès,
c) la voie de communication du premier groupe de sécurité (PGI) est libérée pour l'échange d'informations de communication.

2. Procédé selon la revendication 1,
**caractérisé en ce que**, dans la mesure où plusieurs canaux de communication (TP1, TP2) sont affectés au premier groupe de sécurité (PGI), la voie de sécurité primaire (PP1) est configurée dans le canal de communication, lequel fournit en premier, parmi les canaux de communication mentionnés, un protocole prêt à fonctionner pour la voie de communication primaire entre les deux éléments de réseau (AN, LE).

3. Procédé selon la revendication 1 ou 2,
**caractérisé en ce que** la voie de communication primaire est une voie de sécurité (PP1), laquelle est configurée dans l'au moins un canal de communication (TP1, TP2) du premier groupe de sécurité pour l'échange d'un protocole de sécurité concernant l'affectation des groupes de voies de communication à des canaux de communication, et **en ce que** les messages de commutation de sécurité sont échangés par l'intermédiaire du protocole de sécurité.

4. Procédé selon l'une quelconque des revendications 1 à 3,
**caractérisé en ce que**, après la libération du premier groupe de sécurité (PGI), pour chacun des groupes restants de voies de communication (LCA, LCB)
a) le groupe de voies de communication (LCA) est affecté à un canal de communication (TSA) n'appartenant pas au premier groupe de sécurité, en raison de messages de commutation de sécurité, lesquels sont échangés par l'intermédiaire du premier groupe de sécurité (PGI) et, dans la mesure où ceci est réalisé avec succès,
b) les voies de communication (CPII) du groupe de voies de communication (LCA) sont libérées pour l'échange d'informations de communication.
